Europäisches Patentamt

European Patent Office

Office européen des brevets

(11) Publication number: **0 448 174 A1**

# EUROPEAN PATENT APPLICATION

(21) Application number: 91200614.5

(22) Date of filing: **20.03.91**

(51) Int. Cl.⁵: **C03C 1/00, C03C 6/00**

(30) Priority: **21.03.90 NL 9000668**

(43) Date of publication of application:
**25.09.91 Bulletin 91/39**

(84) Designated Contracting States:
**AT BE CH DE DK ES FR GB GR IT LI LU NL SE**

(71) Applicant: **Van Eggelen, Cornelis Theodorus Petrus**
**Van Rijckevorsellaan 8**
**NL-5673 NC Nuenen(NL)**

(72) Inventor: **van Eggelen, Cornelis Sr.**
**Europalaan 224**
**NL-5671 CD Nuenen(NL)**

(74) Representative: **Noz, Franciscus Xaverius, Ir. et al**
**Algemeen Octrooibureau P.O. Box 645**
**NL-5600 AP Eindhoven(NL)**

(54) Method of processing waste materials.

(57) The invention relates to a method of processing waste materials by adding said materials to raw materials for a final product in which said waste materials are incorporated. The waste materials are added to raw materials for the preparation of glass, and the obtained mixture of waste materials and raw materials is heated and processed into glass.

EP 0 448 174 A1

The invention relates to a method of processing waste materials by adding said materials to raw materials for a final product in which said waste materials are incorporated.

It is generally known to add waste materials, such as fly ash and silt containing heavy metals, to concrete mixture or to bitumen, so that bricks are made from the concrete mixture and a road surface is made from the bitumen. In this manner certain waste materials, which are considered to pollute the environment, can be incorporated and trapped in raw materials for a usable product.

From Dutch Patent Application No. 8303132 it is furthermore known to add waste materials to liquefied glass, so that the waste materials are incorporated in the liquefied glass, after which the aggregate is cooled and solidified to form various shapes, such as cylinders, blocks or marbles, whereby it is nearly impossible for the waste material to be lixiviated from the glass product.

From Dutch Patent Application No. 7312602 it is known to incorporate radio-active waste materials in phosphate glass, whereby the improvement is considered to be in the specific supply of the solutions or suspensions of the radio-active waste materials.

It has now been found that under certain circumstances it is possible to incorporate the waste materials in a final product more adequately. Dependent on the nature of the raw materials it is possible to obtain a usable final product. The invention as mentioned in the preamble is therefore characterized in that the waste materials are added to raw materials for the preparation of glass, and the obtained mixture of waste materials and raw materials is heated and processed into glass. The glass produced in this manner may be a semimanufactured product or a final product. By the term final product is meant that the glass can be used for manufacturing articles of use, while the term semimanufactured product implies that the first objective has been accomplished, i.e. the waste materials are no longer environmentally hazardous and are well-incorporated in the glass product obtained, whilst the glass is not used directly any more.

Because the waste materials must undergo a glass production process it will be apparent that the waste materials must have or must be given such a shape that the waste materials do not interfere with the production of glass. For that purpose it may be necessary for the waste materials to be partially or completely dried prior to being added to the raw materials for the glass. Because the raw materials for glass and the preparation of glass are generally known, or reference may be made to the literature in this field, the further glass production need not need be explained in more detail.

When mixing the waste materials and the raw materials it may be advantageous to add a non-interfering liquid, so that the formation of dust during mixing is prevented or decreased.

Although by no means meant to constitute a limitation, the following examples of waste materials which may be mixed with the raw materials for glass may be mentioned: polluted soil, polluted silt, asbestos-containing waste, waste from galvanizing companies and leftover paint.

In order to be able to have the waste materials react with the raw materials for the glass in the desired manner, it is recommended to elevate the temperature of the mixture of waste materials and raw materials in steps, so that in a first step waste materials are dried and in a second step said materials are decomposed, if necessary, followed by the final step wherein the glass production takes place, after which the melt is cooled and processed into glass in the usual manner.

The glass to be obtained in many forms is not detrimental to the environment, not even after breaking or grinding, this in contrast to the techniques described before, wherein waste materials are mixed with liquefied glass and subsequently solidified. Now the waste materials are not mixed with glass but with the raw materials for glass, whereby it is possible to take account of the composition of the waste materials when selecting the raw materials, so that certain raw materials are usedin smaller amounts than usual in the glass production. The waste materials are thereby chemically bound in the glass, in the same manner as the raw materials which are normally used. The advantage of the method according to the invention is furthermore that it is not necessary that first glass is prepared, which subsequently needs to be melted and cooled again, but now only the raw materials for glass and the waste materials are mixed and processed into glass in one operation.

The invention will be explained in more detail with reference to the following, non-limitative examples.

Example I
_ _

For the preparation of glass 50.70 kg of quartz sand, 7.82 kg of felspar, 13.20 kg of sodium carbonate, 5.20 kg of potassium carbonate, 0.41 kg of manganese dioxide and 0.35 kg of antimony dioxide were used. To these raw materials for glass 30 kg of lead oxide was added as a waste material. These raw materials and the lead oxide considered to be a waste material were mixed and melted at 1350 - 1400 °C.

A glass product was obtained which could be used for certain purposes. Dependent on the further impurities in the lead oxide the glass might be used as an aggregate product to be used in concrete or for road construction purposes, without the lead, being a heavy metal, displaying the adverse effects connected therewith.

Example II

The method of example I is used, however lead oxide is replaced by cadmium oxide.

Example III

The method of example I is used, whereby however vanadium partially or completely takes the place of lead oxide, however.

**Claims**

1. A method of processing waste materials by adding said materials to raw materials for a final product in which said waste materials are incorporated, characterized in that the waste materials are added to raw materials for the preparation of glass, and the obtained mixture of waste materials and raw materials is heated and processed into glass.

2. A method according to claim 1, characterized in that the glass produced is a semimanufactured product or a final product.

3. A method according to claim 1, characterized in that prior to being added to raw materials for glass the waste materials containing liquid are dried.

4. A method according to claim 1, characterized in that when the waste materials and the raw materials are being mixed a liquid not interfering with the glass production is added, so as to prevent or decrease the formation of dust while mixing is taking place.

5. A method according to claims 1 - 4, characterized in that as the waste materials polluted soil, polluted silt or asbestos-containing waste are used.

6. A method according to claims 1 - 5, characterized in that the glass obtained is used for producing objects or is treated as waste glass, whereby the waste materials incorporated no longer need be considered as hazardous to the environment.

7. A method according to claims 1 - 6, characterized in that the final temperature for the preparation of glass is reached in steps, so as to have the evaporation of liquid from the waste materials and the possible decomposition of waste material take place gradually, and that the residue of the waste materials is the starting material for the glass, besides the raw materials known per se.

8. Glass obtained in accordance with the method according to claims 1 - 7, obtained as waste glass, characterized in that said glass is used as a basic material to be used in concrete or for road construction purposes.

European
Patent Office

EUROPEAN SEARCH
REPORT

Application Number

EP 91 20 0614

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 313 321 (STAUFFER CHEMICAL COMPANY)<br>* the whole document *<br>— — — | 1-4,6 | C 03 C 1/00<br>C 03 C 6/00 |
| X | GB-A-2 170 496 (ROBERTS)<br>* the whole document *<br>— — — | 1-3,5,6 | |
| X | GLASS AND CERAMICS. vol. 44, no. 3/4, April 1987, NEW YORK US pages 131 - 133; I.A.KLYUCHNIK ET AL.: "BUILDING GLASS MADE FROM WASTES FROM FERROSILICON PRODUCTION."<br>* the whole document *<br>— — — | 1,2,6,8 | |
| X | PATENT ABSTRACTS OF JAPAN vol. 13, no. 546 (C-661)(3894) 06 December 1989,<br>& JP-A-01 224084 (TOYO NENKI) 07 September 1989,<br>* the whole document *<br>— — — | 1,2,6 | |
| X | US-A-4 793 933 (ROSTOKER)<br>* column 1, line 1 - column 3, line 46 *<br>— — — | 1-3,5-8 | |
| P,X | EP-A-0 398 298 (MORANDO IMPIANTI ETC.)<br>* column 1, line 1 - column 6, line 50 *<br>— — — | 1-8 | TECHNICAL FIELDS SEARCHED (Int. Cl.5) |
| P,X | WO-A-9 009 211 (MCNEILL)<br>* abstract *<br>— — — — — | 1,2,6 | C 03 C |

The present search report has been drawn up for all claims

| Place of search | Date of completion of search | Examiner |
|---|---|---|
| The Hague | 24 June 91 | VAN BOMMEL L. |